Europäisches Patentamt

(19) European Patent Office

Office européen des brevets

(11) Publication number: **0 024 851**

**B1**

(12) **EUROPEAN PATENT SPECIFICATION**

(45) Date of publication of patent specification: **24.07.85**

(21) Application number: **80302783.8**

(22) Date of filing: **13.08.80**

(51) Int. Cl.⁴: **C 01 B 11/02**

(54) **Process for preparing chlorine dioxide.**

(30) Priority: **13.08.79 US 65927**

(43) Date of publication of application:
**11.03.81 Bulletin 81/10**

(45) Publication of the grant of the patent:
**24.07.85 Bulletin 85/30**

(84) Designated Contracting States:
**CH DE FR GB IT LI**

(56) References cited:
**DE-A-2 343 171**
**DE-B-1 173 069**
**US-A-2 043 284**
**US-A-2 131 447**
**US-A-2 344 346**
**US-A-2 388 202**
**US-A-3 502 443**
**US-A-3 816 077**
**US-A-4 013 761**

(73) Proprietor: **RIO LINDA CHEMICAL COMPANY,
INCORPORATED**
**Orenco International Division 410 N. 10th Street**
**Sacramento California 95814 (US)**

(72) Inventor: **Hicks, Bruce Wayne**
**7035 West 4th Street**
**Rio Linda California 95673 (US)**

(74) Representative: **Coulson, Antony John et al**
**ABEL & IMRAY, Northumberland House 303-306
High Holborn
London, WC1V 7LH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The invention relates to a process for preparing chlorine dioxide by reacting together two or more reactants which yield chlorine dioxide and diluting the chlorine dioxide thus produced.

Chlorine dioxide is used in a variety of processes including a large number of bactericidal applications, especially in the fields of water treatment and odour abatement, and its usage is continuing to grow. However, due to the unstable nature of gaseous chlorine dioxide when compressed, it is necessary to produce chlorine dioxide on site rather than to produce it before it is required and to store and transport it for later use.

A known process for the production of chlorine dioxide involves the reaction of a chlorinated water stream with an alkali metal chlorite, the generated chlorine dioxide then being introduced into the particular material or system to be treated.

The prior art contains numerous disclosures of various types of chlorine dioxide generators, most of which comprise elongated glass or plastics columns of various construction. Reference is made, for example, to U.S. Patents Nos. 4,013,761 and 3,502,443.

Another chlorine dioxide generating system is disclosed in U.S. Patent No. 3,816,077, which employs sodium chlorate, sodium chloride and an acid.

All of these known chlorine dioxide generators which have employed columns, tend to be large and bulky. They require the use of chemical feed pumps to meter in the reactants but suffer from inadequate mixing thereof.

Another disadvantage of these column reactors, especially when employing low chlorine feed rates or when using water that is highly alkaline, and especially when gaseous chlorine is used as one of the reactants, is that hydrolysis of the chlorine into HOCl becomes a problem. Furthermore, the reaction operates inefficiently at pH values outside the range of 3 to 4 so that excess chlorine and/or a third reactant, such as a mineral acid, must frequently be added to bring the pH into such a range.

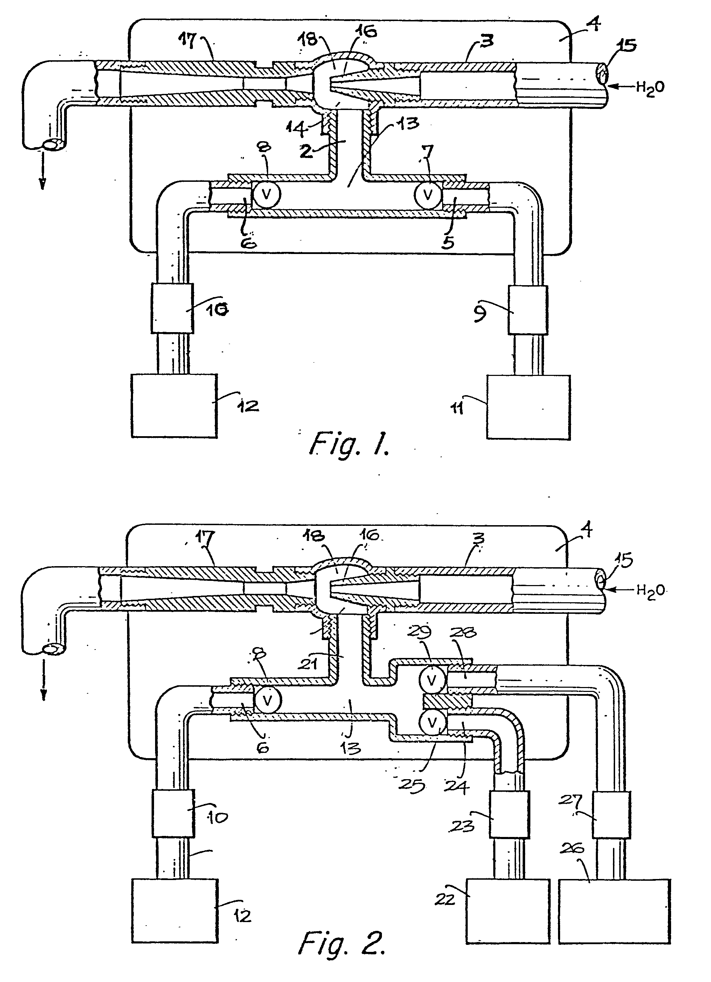

Another apparatus for the manufacture of chlorine dioxide from aqueous chlorite and acid is described in DE—OS 2343171. This apparatus includes a reaction vessel which is supplied from two containers for the reaction components and, on the upstream or downstream side of the reaction vessel a water injection pump which creates suction to draw the reaction components into the reaction vessel, together with metering valves and vacuum breaking valves to prevent mixing of the reaction components in the event of failure of the water supply to the injection pump. The apparatus described and illustrated, especially in Figure 1 of DE—OS 2343171, involves a complex system of valves and pipework and a large reaction vessel where a potentially dangerous build-up of chlorine dioxide could occur and a pipework system through which the generated chlorine dioxide must pass before it is safely diluted with water.

The reaction of gas chlorine with concentrated sodium chlorite solutions has already been described also in, for example U.S. Patents Nos. 2,131,447, 2,388,204, and 2,043,284. However, all of these methods utilize chlorine gas under pressure and use air or an inert gas to dilute and/or strip the chlorine dioxide gas formed. Chlorine gas pressure feed systems are rarely used today because of safety problems, being replaced by demand regulators. Also these methods involve cumbersome elongated reaction towers or complicated recirculating pump systems that are costly and prone to maintenance problems. All of these methods suffer from the possibility of over-production of chlorine dioxide and the handling of gaseous chlorine dioxide, which is very dangerous and prone to explosion.

There is therefore a need for a system by which chlorine dioxide can be generated *in situ* rapidly from relatively concentrated starting materials, the generated chlorine dioxide can be immediately diluted so as to avoid a potentially dangerous build-up of undiluted chlorine dioxide and with the built-in feature of preventing contact of the reactants if the dilution stage should fail.

The present invention provides a process for the preparation of chlorine dioxide by reaction of an alkali metal chlorite and gaseous chlorine or by reaction of an alkali metal hypochlorite, an alkali metal chlorite, and a mineral acid, characterised in that the process is conducted to give substantially instantaneous reaction with rapid and intimate mixing of the reactants in a reaction zone and in the substantial absence of any added fluid preventing substantially instantaneous reaction, with the result that the reactants undergo such reaction in the reaction zone to form chlorine dioxide which is immediately educted from the reaction zone into a diluting fluid by suction generated by flow of the diluting fluid through a venturi.

As is explained in more detail hereinafter, the process of the present invention offers a number of important advantages in chlorine dioxide generation in terms of improved efficiency, conversion rates and safety. The features characterising the process of the invention contribute and interact in enabling the various advantages to be achieved.

The process of the present invention enables chlorine dioxide to be generated in a safe, explosion-proof manner by virtue of the immediate evacuation of all the chlorine dioxide formed as well as all of the liquid reaction mixture, i.e. chlorite solution and gaseous chlorine or chlorite, hypochlorite and acid solutions, at the same time. This offers the added safety feature of arranging that if the vacuum power source stops or the vacuum line is broken, all chlorine dioxide generation stops, thus avoiding over-production of chlorine dioxide which could result in an explosion.

The reactants which react together to produce chlorine dioxide are, for example sodium or potassium chlorite, and gaseous chlorine

$$2NaClO_2 + Cl_2 \rightarrow 2ClO_2 + 2NaCl$$

or an alkali metal hypochlorite, for example sodium or potassium hypochlorite, an alkali metal chlorite, for example sodium or potassium chlorite, and a mineral acid, for example phosphoric, sulphuric or hydrochloric acid

$$2NaClO_2 + NaClO + 2HCl \rightarrow 2ClO_2 + 3NaCl + H_2O,$$

The diluting fluid may be air, steam of another gas which is inert to $ClO_2$, for example nitrogen, but is most preferably water.

Several forms of apparatus which may be used in carrying out the process of the present invention will now be described, by way of example, with reference to the accompanying drawings, in which:

Figure 1 illustrates a form of apparatus for a two-reactant system for the generation of chlorine dioxide;

Figure 2 illustrates a form of apparatus for a three-reactant system for the generation of chlorine dioxide;

Figure 3 illustrates an alternative configuration for the apparatus shown in Figure 1; and

Figure 4 illustrates an alternative configuration for the apparatus shown in Figure 2.

Referring first to Figure 1 of the drawings, the apparatus 1 includes a reaction chamber 2 and an eductor unit 3 both attached (by means not shown) to a suitable support 4. The reaction chamber 2 is of inverted 'T' shape having at the ends of its horizontal limbs inlets 5 and 6 for reactants. These inlets are closed by non-return valves 7 and 8, respectively, and are connected via rotameters 9 and 10, respectively, to sources of reactants, that is chlorite ions (for example sodium chlorite solution) and gaseous chlorine 11 and 12, respectively. Between the inlets 5 and 6 at the junction of the T there is a contact area 13 where the reactants come into contact and react. The reaction mixture then passes through the reaction chamber 2 formed by the vertical limb of the T and through an outlet 14 into the eductor unit 3 which withdraws the generated chlorine dioxide from the chamber 2.

The eductor unit includes a horizontal inlet pipe 15 for water, the pipe 15 having a nozzle (venturi) 16 therein. The front tip of the nozzle is located substantially centrally above the outlet 14 from the reaction chamber 2 and normal thereto. Spaced apart from and downstream of the tip is a diffuser or outlet 17.

Water passing through the venturi 16 creates a zone of low pressure downstream thereof and thus sucks the chlorine dioxide and reaction mixture upwardly and into the outlet 17. The water from the pipe 15 and the entrained chlorine dioxide leave through the outlet 17 and can be passed to water or other material to be treated, for example waste in a sewage plant.

The apparatus shown in Figure 2 of the drawings is similar to that shown in Figure 1 except that one of the horizontal limbs of the T is used for the introduction into the reaction chamber 21 thereof of two reactants, for example acid from a source 22 via a rotameter 23, inlet 24 and non-return valve 25, and hypochlorite ions, for example as sodium hypochlorite solution, from a source 26 via a rotameter 27, inlet 28 and non-return valve 29. All of the other parts of the apparatus are identical to those of the apparatus of Figure 1 and are identified by the same reference numerals.

While the hypochlorite and acid both enter from the same side of the T and thus mix prior to contacting the chlorite, it is possible for any two of the three reactants to enter from one side.

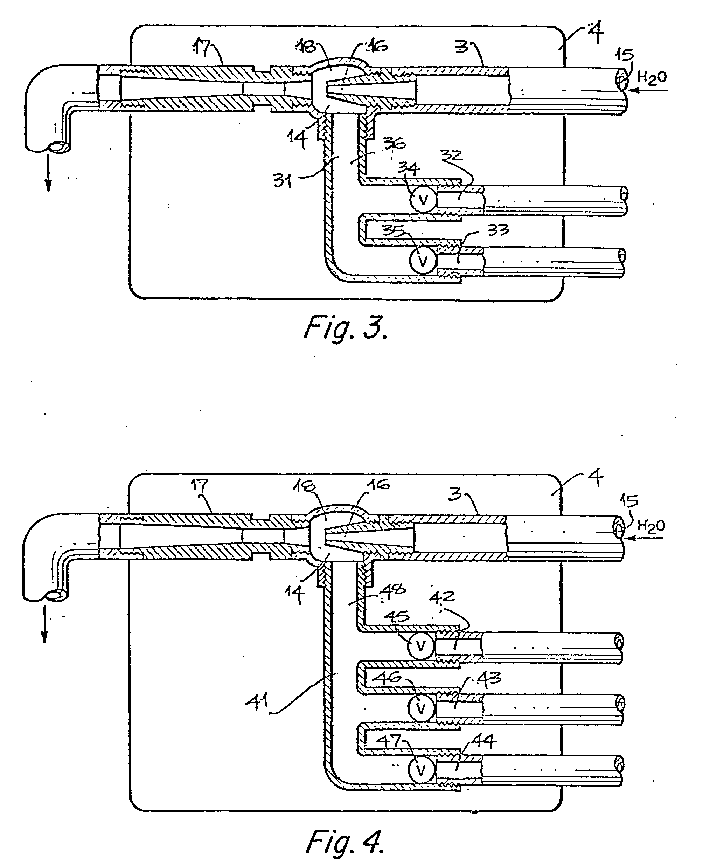

The forms of apparatus shown in Figures 3 and 4 are alternatives to those shown in Figures 1 and 2 which use two- and three-reactant systems, respectively. In the apparatus of Figure 3 the two reactants enter the reaction chamber 31 through inlets 32 and 33 via non-return valves 34 and 35, respectively, and combine in a contact area 36 of the reaction chamber. In the apparatus of Figure 4, the three reactants enter the reaction chamber 41 through inlets 42, 43 and 44 via non-return valves 45, 46 and 47, respectively, and combine in a contact area 48 of the reaction chamber. Again, the remaining parts of both apparatus are identical to those of the apparatus of Figure 1 and are identified by the same reference numerals.

It has been found that by allowing the reactants to premix in the contact area, prior to mixing with water in the eductor unit and delivery to the place of utilization of the chlorine dioxide, that greater efficiency of the generator results, with a higher conversion yield of chlorine dioxide.

It has been mentioned above that water or some other fluid is employed to move the $ClO_2$ from the contact area through the eductor. Quite clearly, any compatible liquid or gas that will not react with the $ClO_2$, for example steam or $N_2$, may be employed. The flow rate of this moving fluid should be such that for a given feed rate of reactants the moving fluid is able to remove all of the $ClO_2$ generated, such that a buildup of product is avoided. Thus for water, the cheapest and probably the easiest fluid to use, the flow rate should be such as to exhaust all and absorb substantially all of the $ClO_2$. This rate is readily determinable since it is known that the solubility of $ClO_2$ in water at room temperature is about 2,900 ppm (parts per million). It has also been determined that an operable vacuum range for any of the embodiments of the apparatus is within the range of 17—100 kPa. Accordingly, the flow through the eductor can be adjusted to remove the product as generated. Lengthening the contact area of the apparatus can be beneficial as the high conversion yields associated with this process are due to the ability of the reactants to pre-react in the substantial absence of any additional fluid having a diluent or quenching effect. Thus, conversion yields of from about 72% to 92% depending on the reactants, i.e. 2 or 3 components can be achieved using the process of the invention, compared to conversions of about 40% in known column-type reactors, when high pH water and/or low chlorine dioxide feed rates are used.

The contact area may contain appropriate packing. It is believed that the presence of such packing provides better and more uniform mixing of the reactants and allows for more surface area contact prior to dilution with water in the eductor. Any known packing can be used for this purpose as long as it is not affected by the reactants or the end product. For example, polyethylene Raschig rings have proved to be an advantageous packing material.

Using the procedure of the present invention conversion rates to chlorine dioxide of 97% to 98% can be achieved as compared to prior art recoveries of about 89% chlorine dioxide. Typically such a system would have reactants being reacted wherein 15 to 38 liters of a 25% $NaClO_2$ solution was employed per hour.

As to the overall size of the reaction chamber of the apparatus, it may include a contact zone that varies from <25 mm to 3m, or more. However no advantage is achieved from the use of an enormous reaction chamber since most normal needs can be satisfied by a chamber having a contact area of 150 mm or less in length with appropriate width, for example 25 mm.

For example, using a T-shaped arrangement in which the reaction chamber has a length of 100 mm and a diameter of about 18 mm, with small bead-like packing and a 50 mm horizontal T section, a feed ratio of 0.45 kg $NaClO_2$ to 0.225 kg $Cl_2$ gives a 97% to 98% conversion in near neutral pH water at a production rate of 136 kg of $ClO_2$ per day.

Using the apparatus described above, the chamber enables the reactants to react neat, prior to mixing with any other fluid where further reaction of the reactants may or may not take place. In contrast, the known column reactors introduce the reactants in the presence of a diluting fluid, usually water, to avoid any possible build-up of chlorine dioxide. In accordance with the invention, removal of the product by the eductor means that the build-up of $ClO_2$ in a confined volume can be avoided while it is still possible to achieve high conversion rates.

The eductor unit itself can be of any size compatible with the reaction chamber employed so long as it can remove the product as generated. A typical manufacturer of such eductors is Pardee Engineering of Berkeley, California, United States of America.

The apparatus used in carrying out the process of this invention may be constucted of metal, for example corrosion resistant steel, or preferably an inert plastics material, for example ABS or polyvinyl chloride.

The eductor should be so dimensioned as to permit absorption by the water of all of the $ClO_2$ being generated. It is clear, therefore, that the size of the eductor is dependent primarily upon the flow rates of the reactants and is virtually independent of the size of the reaction chamber.

As mentioned above, the general reactions for both the two and three component processes are well known. The present invention has the advantage that the reaction is carried out under such conditions (rapid, intimate mixing in the absence of a diluent or quenching fluid) and in such a zone as to be substantially instantaneous, and that the reaction is removed from the diluting or possible quenching effect of water. As the chlorine dioxide is formed, it is immediately sucked up by the eductor and either dispersed or dissolved in moving water, air, steam or other diluting fluid. This water containing dissolved $ClO_2$ is then moved out of the eductor, preferably for immediate use. The actual reaction time before eduction is extremely short.

The process of the invention has the further benefit of not permitting large volumes of chlorine dioxide to build-up since the gas is dissolved immediately after generation, thus moving the reaction equilibrium to the right, and so that as the product is removed more product can form giving rise to the higher yields.

Thus, a very short, packed reaction chamber that provides instantaneous contact of the reactants, measured in fractions of a second, has provided excellent efficiences.

As stated above, the reactants used in the two-component process are an alkali metal chlorite, for example sodium or potassium chlorite, and gaseous chlorine. The three component system uses a similar chlorite source and an alkali metal hypochlorite, for example sodium or potassium hypochlorite, and a mineral acid, for example $H_3PO_4$, $H_2SO_4$ or HCl, at concentrations known in the art. The chlorite and hypochlorite are used in solution. It has been found that the use of concentrated solutions of these reactants, for example above 10% strength, yields excellent results and that what would normally be called dilute solutions, i.e. below 10% by weight solutions, also give excellent results. The reason for this is that the so-called 'dilute' solutions are relatively concentrated when compared with prior art proposals which call for the reactants to be diluted with up to 99% water.

The following Examples illustrate the invention.

Example I

Chlorine dioxide was generated in apparatus as shown in Figure 1 under the following conditions. A water stream which had been adjusted to pH 9.3 by the addition of sodium hydroxide was fed to the apparatus at the rate of 1135 l/h at a constant pressure of 262 kPa. A 15% by weight solution of sodium chlorite was educted through a meter into the generator at the rate of 2.04 l/h. Chlorine gas was educted through a commercial chlorinator at the rate of 0.22 kg per hour. After the generator has been run for approximately 5 minutes to ensure a stable continuous process, a sample of the generated chlorine dioxide was collected in a dark bottle and each volume immediately diluted to 10 volumes with water. The sample was then tested on a Turner spectrophotometer at 360 nm, the results showing a 72% efficiency in the production of chlorine dioxide.

Comparison

A known generator was run at similar rates: A stream of water which had been adjusted to pH 9.3 by the addition of sodium hydroxide was fed to the apparatus at the rate of 1135 l/h at a constant pressure of 262 kPa. This water stream was chlorinated at a rate of 0.302 kg/hour. A 15% by weight solution of sodium chlorite was pumped into the base of the column at a rate of 2.76 l/h. The generator was run for approximately 20 minutes to ensure a stable continuous process. A sample was drawn from the exit of the $ClO_2$ generator column. The sample was collected in a dark bottle and each volume diluted to ten volumes with water. The sample was then tested as above and the results showed a 40.5% efficiency in the conversion to chlorine dioxide.

Thus, even in water of high pH, where the hydrolysis of chlorine is a problem, as well as at low feed rates of chlorine where the pH of the chlorinated water stream does not reach the proper reaction range of pH3, simply by providing a very rapid reaction between the sodium chlorite solution and the chlorine gas, prior to entering the water stream the efficiency of chlorine dioxide production goes up considerably.

Example II

Again using the apparatus shown in Figure 1, a packing material consisting of small bead-like chips of an inert composition were placed in the reaction chamber. Chlorine dioxide was then generated under the following conditions. A water stream which had been adjusted to pH 9.3 by the addition of sodium hydroxide was fed to the apparatus at the rate of 1135 l/h at a constant pressure of 262 kPa. A 15% by weight solution of sodium chlorite was educted through a meter into the generator at the rate of 2.5 l/h. Chlorine gas was educted through a commercial chlorinator at the rate of 0.22 kg per hour. The generator was run for approximately 5 minutes to ensure a stable continuous process. A sample was withdrawn approximately 100 mm from the generator outlet. The sample was collected in a dark bottle and each volume immediately diluted to 10 volumes with water. The sample was tested as described above and shown a 92% efficiency in the production of chlorine dioxide.

Example III

Chlorine dioxide was generated using the apparatus shown in Figure 2 containing packing in the reaction zone under the following conditions. A water stream previously adjusted to pH 9.5 by the addition of sodium hydroxide was fed to the generator at the rate of 1158 l/h under a constant pressure of 262 kPa. A 25% by weight solution of sodium chlorite was educted through a rotameter into the generator at the rate of 2.84 l/h. A 15% by weight solution of sodium hypochlorite was educted through a rotameter into the generator at the rate of 2.27 l/h. A 30% by weight solution of hydrochloric acid was educted through a rotameter at the rate of 1.13 l/h. The generator was run for approximately 5 minutes to ensure a stable continuous process. A sample was withdrawn and collected in a dark bottle and each volume immediately diluted to 20 volumes with water. The sample was then tested on a spectrophotometer at 360 nm. The results showed an 89% efficiency in the production of chlorine dioxide.

Comparison

A known column generator was run at similar rates. A stream of water which had been adjusted to pH 9.5 by the addition of sodium hydroxide was fed at the rate of 1158 l/h at a constant pressure of 262 kPa. A 15% by weight solution of sodium hypochlorite was pumped into the water stream at the rate of 1.97 l/h. A 30% by weight concentration of hydrochloric acid was pumped into the water stream at the rate of 1.02 l/h. The water stream then entered the bottom of the column where a 25% by weight solution of sodium chlorite was pumped in at the rate of 2.69 l/h. The generator was run for approximately 20 minutes to ensure a stable continuous process. A sample was drawn from the top of the column outlet and collected in a dark bottle and each volume immediately diluted to 20 volumes with water. The sample was then tested as described above. The results showed a 38% efficiency in the production of chlorine dioxide.

**Claims**

1. A process for the preparation of chlorine dioxide by reaction of an alkali metal chlorite and gaseous chlorine or by reaction of an alkali metal hypochlorite, an alkali metal chlorite, and a mineral acid, characterised in that the process is conducted to give substantially instantaneous reaction with rapid and intimate mixing of the reactants in a reaction zone and in the substantial absence of any added fluid preventing substantially instantaneous reaction, with the result that the reactants undergo such reaction in the reaction zone to form chlorine dioxide which is immediately educted from the reaction zone into a diluting fluid by suction generated by flow of the diluting fluid through a venturi.

2. A process as claimed in claim 1, wherein the reaction is between a chlorite and gaseous chlorine and the chlorite is used as an aqueous solution having a strength of more than 10% by weight.

3. A process as claimed in claim 1, wherein the reaction is between a chlorite, a hypochlorite, and a mineral acid, and the hypochlorite and the chlorite are used as aqueous solutions each having a strength of more than 10% by weight.

4. A process as claimed in any one of claims 1 to 3, wherein the diluting fluid is water.

## Patentansprüche

1. Ein Verfahren zur Herstellung von Chlordioxid durch Reaktion eines Alkalimetallchlorites und gasförmigem Chlors oder durch Reaktion eines Alkalimetallhypochlorites, eines Alkalimetallchlorites und einer Mineralsäure, dadurch gekennzeichnet, daß das Verfahren derart geführt wird, daß sich eine im wesentlichen augenblickliche Reaktion mit raschem und innigem Mischen der Reaktanten in der Reaktionszone ergibt, wobei im wesentlichen jegliches zugesetztes Fluidum abwesend ist, das die im wesentlichen augenblickliche Reaktion verhindert, mit dem Ergebnis, daß die Reaktanten einer derartigen Reaktion in der Reaktionszone unterworfen sind, daß sich Chlordioxid bildet, das sofort aus der Reaktionszone in ein verdünnendes Fluidum durch einen Sog abgezogen wird, der durch das Durchströmen des verdünnenden Fluidums durch eine Venturidüse erzeugt wird.

2. Ein Verfahren, wie in Ansprch 1, beansprucht, worin die Reaktion zwischen einem Chlorit und gasförmigem Chlor eintritt, und das Chlorit als wässrige Lösung mit einer Konzentration von mehr als 10 Gew.-% verwendet wird.

3. Ein Verfahren, wie in Anspruch 1 beansprucht, worin die Reaktion zwischen einem Chlorit, einem Hypochlorit und einer Mineralsäure eintritt, und das Hypochlorit und das Chlorit als wässrige Lösungen verwendet werden, deren jede eine Konzentration von mehr als 10 Gew.-% hat.

4. Ein Verfahren, wie in irgendeinem der Ansprüche 1 bis 3 beansprucht, worin das verdünnende Fluidum Wasser ist.

## Revendications

1. Procédé de préparation de bioxyde de chlore par réaction d'un chlorite de métal alcalin et de chlore gazeux ou par réaction d'un hypochlorite de métal alcalin, d'un chlorite de métal alcalin et d'un acide minéral, caractérisé en ce qu'il est mis en oeuvre pour donner une réaction pratiquement instantanée avec un mélange rapide et intime des corps réactionnels dans une zone de réaction et sensiblement en l'absence de tout fluide ajouté empêchant une réaction pratiquement instantanée, le résultant étant que les corps réactionnels subissent cette réaction dans la zone de réaction en formant du bioxyde de chlore, lequel est immédiatement acheminé de la zone de réaction jusque dans un fluide de dilution par l'aspiration engendrée par l'écoulement de fluide de dilution à travers un venturi.

2. Procédé selon la revendication 1, dans lequel la réaction s'effectue entre un chlorite et du chlore gazeux et le chlorite est utilisé comme solution aqueuse ayant une concentration supérieure à 10% en poids.

3. Procédé selon la revendication 1, dans lequel la réaction s'effectue entre un chlorite, un hypochlorite et un acide minéral, et l'hypochlorite et le chlorite sont utilisés sous forme de solutions aqueuses présentant chacune une concentration supérieure à 10% en poids.

4. Procédé selon l'une quelconque des revendications 1 à 3, dans lequel le fluide de dilution est l'eau.

*Fig. 1.*

*Fig. 2.*

Fig. 3.

Fig. 4.